# EUROPEAN PATENT SPECIFICATION

(11) **EP 2 482 583 B1**
(45) Date of publication and mention of the grant of the patent: **13.12.2017**
(21) Application number: 11290061.8
(22) Date of filing: 31.01.2011
(51) Int. Cl.: H04W 24/02, H04W 64/00

(54) **A SMALL CELL BASE STATION AND A METHOD FOR AUTHORISING A SMALL CELL BASE STATION TO TRANSMIT**
KLEINE ZELLENBASISSTATION UND VERFAHREN DER SENDEAUTORISIERUNG DER ZELLENBASISSTATION
PETITE STATION DE BASE CELLULAIRE ET PROCÉDÉ POUR AUTORISER UNE PETITE STATION DE BASE CELLULAIRE À TRANSMETTRE

(43) Date of publication of application: 01.08.2012
(73) Proprietor: ALCATEL LUCENT, 92100 Boulogne-Billancourt (FR)
(72) Inventor: Bradley, Nigel L., Cricklade SN6 6LT Wiltshire (GB); Sapiano, Philip C., Corsham SN13 9AY Wiltshire (GB); Skeates, Mark T., Bath BA1 4PA Somerset (GB); Holmes, Paul D., Lea SN16 9PF Wiltshire (GB)
(74) Representative: Sarup, David Alexander

(56) References cited:
- WO-A1-01/90773
- WO-A1-2010/040099
- US-A1- 2006 211 431
- US-A1- 2008 318 596

## Description

### Field of the Invention

The present invention relates to telecommunications, in particular to wireless telecommunications.

### Description of the Related Art

Wireless telecommunications systems are well-known. Many such systems are cellular, in that radio coverage is provided by a bundle of radio coverage areas known as cells. A base station that provides radio coverage is located in each cell. Traditional base stations provide coverage in relatively large geographic areas and the corresponding cells are often referred to as macrocells.

It is possible to establish smaller sized cells within a macrocell. Cells that are smaller than macrocells are sometimes referred to as small cells, microcells, picocells, or femtocells, but we use the terms small cells and femtocells interchangeably and generically for cells that are smaller than macrocells.

One way to establish a femtocell is to provide a femtocell base station that operates within a relatively limited range as compared to a macrocell. One example of use of a femtocell base station is to provide wireless communication coverage within a building, for example in a residential or enterprise environment. The femtocell base station is of a relatively low transmit power and hence each femtocell is of a small coverage area compared to a macrocell. A typical coverage range is tens of metres.

Femtocell base stations have auto-configuring properties so as to support plug-and-play deployment by users, for example in which femto base stations may integrate themselves into an existing macrocell network so as to connect to the core network of the macrocell network.

Femtocell base stations are intended primarily for users belonging to a particular home or office. Some femtocell base stations may be private access or public access. In femtocell base stations that are private access, access is restricted only to registered users, for example family members or particular groups of employees. In femtocell base stations that are public access, other users may also use the femtocell base station, subject to certain restrictions to protect the Quality of Service received by registered users.

One known type of femtocell base station uses a broadband Internet Protocol connection as "backhaul", namely for connecting to the core network. One type of broadband Internet Protocol connection is a Digital Subscriber Line (DSL). The DSL connects a DSL transmitter-receiver ("transceiver") of the femtocell base station to the core network. The DSL allows voice calls and other services provided via the femtocell base station to be supported. An alternative to such a wired broadband backhaul is to have a wireless backhaul.

Femtocell base stations are sometimes referred to as femtos.

Upon startup, a femto may be required to determine its geographical location, the determined location is used to check whether the femto is in a position where the femto is authorised to transmit so as to provide service as a base station. The determined location may also be used to provide appropriate location-based services.

One known approach for the femto to determine its own location is to include, within the femto, a Global Navigation Satellite System (GNSS) receiver, for example a Global Positioning System (GPS) receiver.

International (P.C.T.) Patent Publication WO2010/040099 provides technical background. WO2010/40099 discloses:
Systems and methods for communication include components and methods for detecting, at an access point base station, location-verification data transmitted by at least one macro cell. Further, the components and method include transmitting a response message, including location information, via a backhaul network to a location authentication component to authenticate a location of the access point station based on the location information, wherein the location information includes location data that is a function of the location- verification data. In some aspects, an operation of the access point base station may be allowed or disallowed based on an authentication of the location information.

### Summary

The reader is referred to the appended independent claims. Some preferred features are laid out in the dependent claims.

An example of the present invention is a method of authorising a small cell base station to transmit comprising the small cell base station:
detecting a neighbour base station;
sending to the neighbour base station a request for information of the location of the neighbour base station;
receiving said information in which a count is received with the location information, the count indicating the number of base stations between a neighbour base station that is the original source of the location information and the neighbour base station sending the information on;
determining its own location from said information;
checking whether the determined location is within a given area in which the small cell base station is permitted to transmit; and
dependent upon the check indicating that the determined location is within the given area, authorising the small cell base station to transmit.

The locations may be geographical locations.

The information of the location of the neighbour base station may be information of the geographical location of the neighbour base station, for example its GNSS location or GPS location.

Example embodiments of the present invention autonomously share location information from those femtos that can acquire a GPS signal to those that cannot, so as to ensure that all femtos in a networked deployment such as in an office or business building can determine their geographical locations, and hence determine whether authorised to transmit. Some embodiments provide that femtos which cannot obtain a GPS lock will autonomously and automatically obtain location information from femtos that can, in a network of femtos. In some embodiments, a femto receiving the information from a neighbour can then pass the information on to one or more further neighbour femtos also, for example the information cascading through a network from femtos that can achieve a GPS location to those that cannot. Some embodiments may be considered to involve self-organisation of the geographical location determinations of femtos. In some countries, such as USA a femto is not permitted to broadcast without knowledge of its location.

### Brief Description of the Drawings

Embodiments of the present invention will now be described by way of example and with reference to the drawings, in which:
Figure 1 is a diagram illustrating a wireless communications network according to a first embodiment of the present invention,
Figure 2 is a diagram illustrating an example femtocell base station deployment within one macrocell shown in Figure 1,
Figure 3 is a diagram illustrating a femtocell base station,
Figure 4 is a diagram illustrating determination of locations of femtos involving GPS location sharing among femtocells where one of them is positioned to detect GPS location and the others are at deep indoor locations where GPS satellite signals cannot be detected,
Figure 5 is an example message sequence diagram showing location sharing among the femtos,
Figure 6 is a diagram illustrating a location determination for a femto where two femtos are positioned to detect GPS location, and
Figure 7 is a diagram illustrating a location determination involving GPS location sharing where a femto has directional antennas.

### Detailed Description

When considering the known approach of a femto using an internal GPS receiver to determine its location, the inventors realised that this known approach works well when the femto is positioned where it has sufficient "view" of GPS satellites to allow the acquisition of GPS signals, but is not suitable where the femto finds GPS signal acquisition more difficult, such as in a deep indoor location for example deep within a large building that has few windows.

The inventors also realised that a further known approach, namely of attaching an external GPS antenna to the femto so the antenna can be positioned some distance from the femto at a place where GPS signals can be acquired, has disadvantages. Specifically, it requires extra cabling and provides a femto location result of limited accuracy due to the separation of antenna and femto.

The inventors also realised that another known approach for determining femto location, of radio detection of neighbouring macrocells, is also problematic in deep indoor locations.

The inventors devised an alternative approach.

We now describe a network including femtocell base stations, then look in greater detail at the femtocell base station and how location checks are undertaken in respect of femtocell base stations that are in deep indoor locations at which they cannot detect GPS satellite signals.

### Network

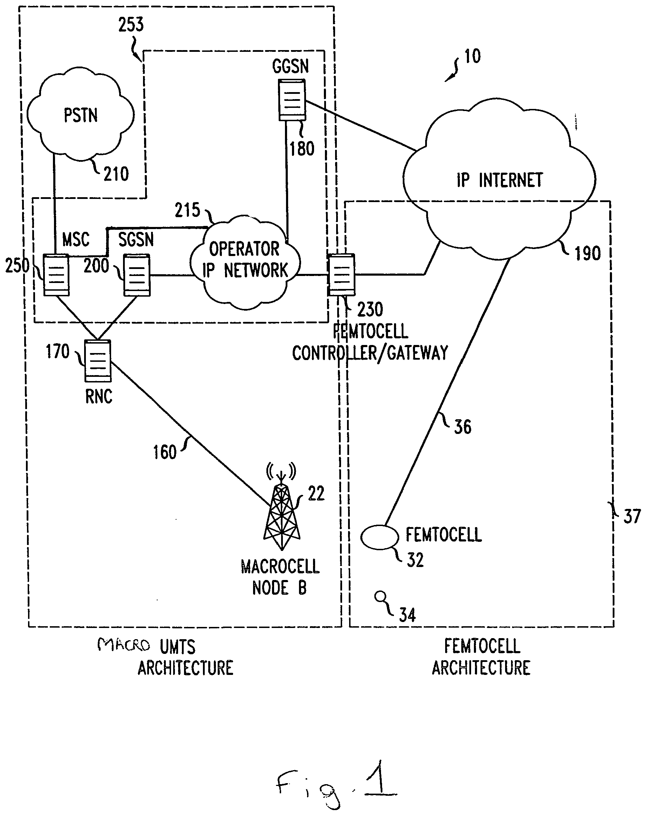

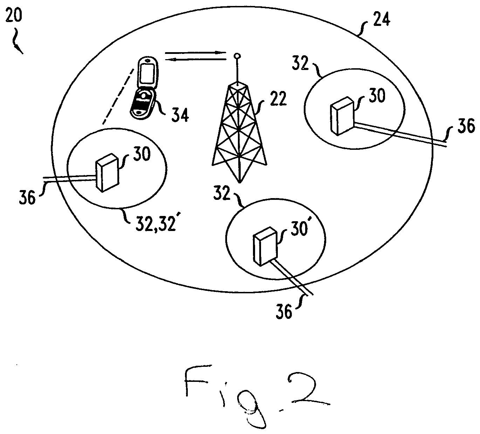

As shown in Figures 1 and 2, a network 10 for wireless communications, through which a user terminal 34 may roam, includes two types of base station, namely macrocell base stations and femtocell base stations (the latter being sometimes called "femtos"). One macrocell base station 22 is shown in Figures 1 and 2 for simplicity. Each macrocell base station has a radio coverage area 24 that is often referred to as a macrocell. The geographic extent of the macrocell 24 depends on the capabilities of the macrocell base station 22 and the surrounding geography.

Each femtocell base station 30 provides wireless communications within a corresponding femtocell 32. A femtocell is a radio coverage area. The radio coverage area of the femtocell 32 is much less than that of the macrocell 24. For example, the femtocell 32 corresponds in size to a user's office or home.

As shown in Figure 1, the network 10 is managed by a radio network controller, RNC, 170. The radio network controller, RNC, 170 controls the operation, for example by communicating with macrocell base stations 22 via a backhaul communications link 160. The radio network controller 170 maintains a neighbour list which includes information about the geographical relationship between cells supported by base stations. In addition, the radio network controller 170 maintains location information which provides information on the location of the user equipment within the wireless communications system 10. The radio network controller 170 is operable to route traffic via circuit-switched and packet-switched networks. For circuit-switched traffic, a mobile switching centre 250 is provided with which the radio network controller 170 may communicate. The mobile switching centre 250 communicates with a circuit-switched network such as a public switched telephone network (PSTN) 210. For packet-switched traffic, the network controller 170 communicates with serving general packet radio service support nodes (SGSNs) 220 and a gateway general packet radio support node (GGSN) 180. The GGSN then communicates with a packet-switch core 190 such as, for example, the Internet.

The MSC 250, SGSN 220, GGSN 180 and operator IP network constitute a so-called core network 253. The MSC 250, SGSN 220 and GGSN 180 are connected by an operator IP network 215 to a femtocell controller/gateway 230.

The femtocell controller/gateway 230 is connected via the Internet 190 to the femtocell base stations 30. These connections to the femtocell controller/gateway 230 are broadband Internet Protocol connections ("backhaul") connections.

In Figure 2, three femtocell base stations 30 and corresponding femtocells 32 are shown for simplicity.

It is possible for a mobile terminal 34 within the macrocell 24 to communicate with the macrocell base station 22 in known manner. When the mobile terminal 34 enters into a femtocell 32 for which the mobile terminal is registered for communications within the femtocell base station 30, it is desirable to handover the connection with the mobile terminal from the macrocell to the femtocell. In the example shown in Figure 2, the user of mobile terminal 34 is a preferred user of the nearest 32' of the femtocells 32.

As shown in Figure 2, the femtocell base stations 30 are connected via the broadband Internet Protocol connections ("backhaul") 36 to the core network (not shown in Figure 2) and hence the rest of the telecommunications "world" (not shown in Figure 2). The "backhaul" connections 36 allow communications between the femtocell base stations 30 through the core network (not shown). The macrocell base station is also connected to the core network (not shown in Figure 2).

### Femtocell base station

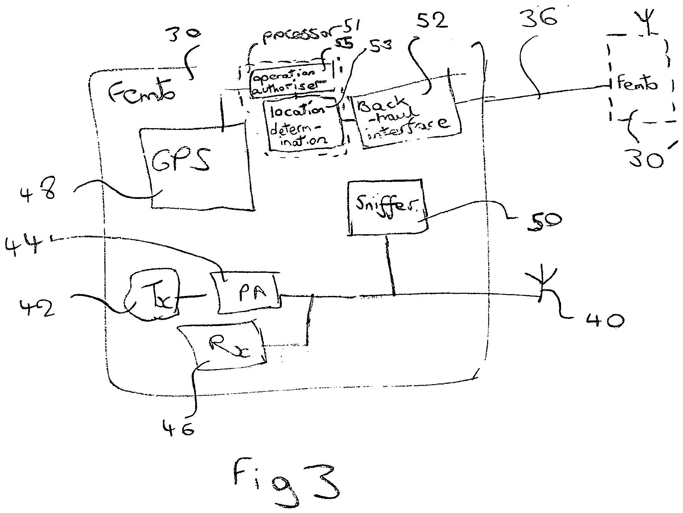

As shown in Figure 3, a femtocell base station 30 includes an antenna 40. A transmitter 42 is connected via a power amplifier 44 to the antenna 40. A receiver 46 is also connected to the antenna 40. A GPS location unit 48 is also provided, having its own antenna (not shown). There is also an additional "sniffer" receiver 50 connected to the antenna 40 that detects in the expected frequency bands of femtos.

The femto 30 includes a backhaul Digital Suscriber Line interface 52 providing a wired backhaul connection 36 to other femtos 30'.

The femto 30 includes a processor 51 connected to the GPS location unit 48 and the backhaul interface 52. The processor 51 includes a location determination stage 53 connected to a transmission operation authorisation stage 55.

### GPS location sharing among femtocells

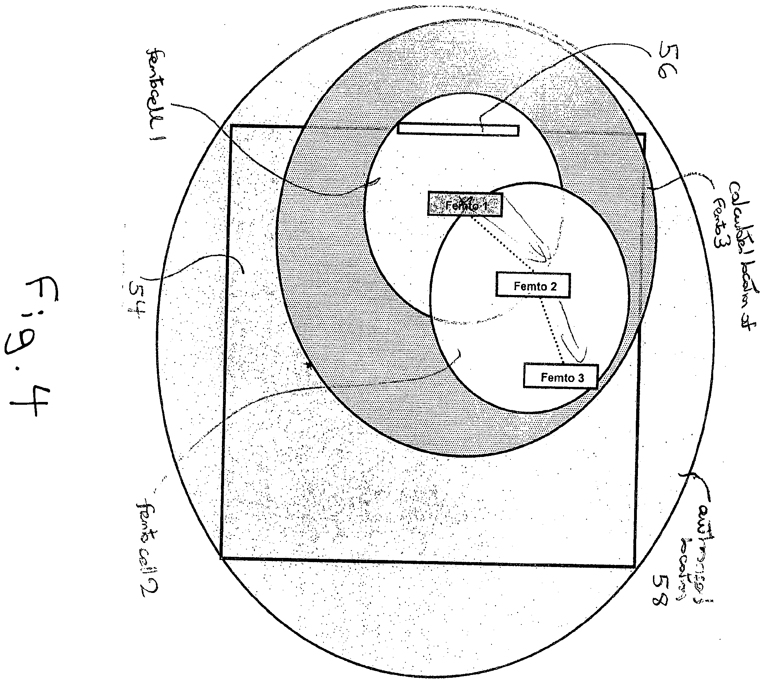

As shown in Figure 4, which is a view from above, a first femto, Femto1, is positioned within a building 54 at a position where GPS signals can be detected, specifically near a window 56 in this example. Femto1 has an associated radio coverage area, namely femtocell1. Other femtos are also deployed within the building 54, namely Femto2 and Femto3 in this example. Femto2 has an associated radio coverage area denoted femtocell2. These femtos, Femto1, Femto2 and Femto3, have been assigned an area 58 in which they are authorised to operate. Each femto is assigned an area by a network operator within which the femto is permitted to be used. In this example, each femto is preprogrammed with an assigned area. The limitation to a particular area is to avoid a femto being used in an area for which frequency bandwidth is not allocated to that femto and so unacceptable interference with other devices might occur.

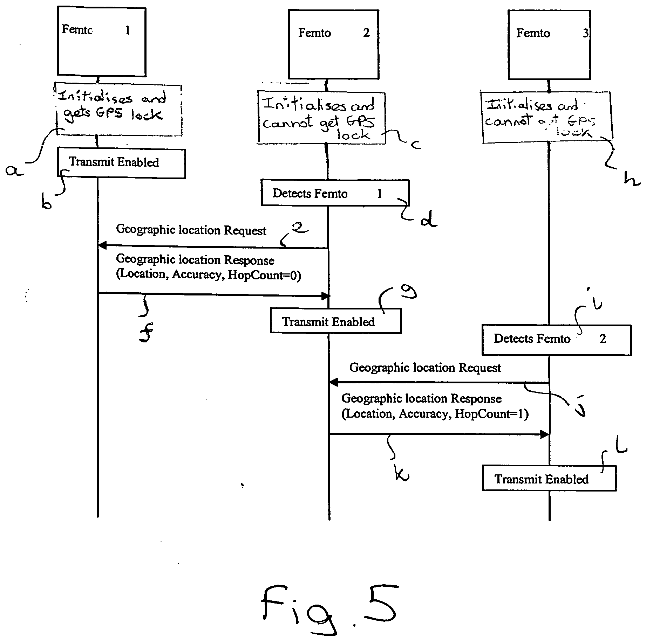

Referring to Figures 4 and 5, using its internal GPS unit, Femto1 boots up and determines (step a) its own location.

As a next step (step b) Femto1 checks and finds that the determined location is within the area within which Femto1 is permitted to operate, so starts transmitting as a base station.

Femto2, which is in a location inside the building where GPS signals cannot be detected, boots up (step c) but fails to determine its own location using its own GPS location unit.

Femto2 detects (step d) transmissions from Femto1 using its so-called "sniffer" receiver. The sniffer receiver detects at the expected frequency bands of femtos.

Femto2 then establishes (not shown in Figure 5) a signalling connection with Femto1 over a backhaul Internet connection 36 and sends (step e) a request for Femto1 to send the location of Femto1. (In an otherwise similar further embodiment, Femto2 optionally measure the pathloss i.e. signal attenuation, from Femto1 by comparing a measured Common Pilot Channel (CPICH) received signal code power (RSCP) to the CPICH power level indicated in the system information broadcast channel).

Femto1 responds (step f) by sending a response including information of its geographic location, an indication of the accuracy of that geographic location information, namely the accuracy of GPS location indicated by its GPS location unit, and an indication that Femto1 is the root source of that information by sending a so-called hop count of zero. (A GPS location is often denoted a GPS "fix").

In a transmission enablement step (step g), Femto2 uses the location information from Femto1 to estimate its own position as being that of Femto1 but with a different positional accuracy based on the accuracy indicated by Femto2 and the measured pathloss to Femto1; and then Femto2 checks and finds that the determined location is within the area within which Femto2 is permitted to operate, the determined location is known to within an acceptable level of accuracy, and the hop count does not exceed a maximum value (say count of four in this example) so starts transmitting as a base station. In this example, Femto2 is considered to be at the same location as Femto1 but to within a greater range (lesser accuracy).

Femto3, which is also in a location inside the building where GPS signals cannot be detected, boots up (step h) but fails to determine its own location using its own GPS location unit.

Femto3 detects (step i) transmissions from Femto2 using its so-called "sniffer" receiver. The sniffer receiver detects at the expected frequency bands of femtos.

Femto3 then establishes (not shown in Figure 5) a signalling connection with Femto2 over a backhaul Internet connection and sends (step j) a request for Femto2 to send the location of Femto2.

Femto2 responds (step k) by sending a response including information of its geographic location, an indication of the (poorer) accuracy of that geographic location information based on the accuracy indicated by Femto2 and the measured pathloss to Femto1, and an indication that Femto2 is not the root source of that information but is one away from the root source, by sending an incremented hop count of one.

In a transmission enablement step (step *l*), Femto3 uses the location information from Femto2 to estimate its own position as being that of Femto2 (and hence Femto1) but with a different (poorer) positional accuracy based on the accuracy indicated by Femto2 and the measured pathloss between Femto3 and Femto2; and then Femto3 checks and finds that its determined location is within the area within which Femto3 is permitted to operate, the determined location is known to within an acceptable level of accuracy, and the hop count does not exceed a maximum value (say count of four in this example) so starts transmitting as a base station. In this example, Femto3 is considered to be at the same location as determined for Femto1 but to within a greater range (lesser accuracy) than for Femto1 or Femto2.

In this example, the above steps are repeated for further femtos (not shown) for example using the location passed through from Femto1 with the accuracy estimate associated with that location adjusted accordingly.

If, at a femto, the accuracy of the location passed through is determined as being less than a given level of what is acceptable, the location passed through is not used to enable transmissions.

If, at a femto, the hop count is greater than a given value, say 4, it is considered that the location information is not to be used as a femto may be too remote from the root source femto providing the original GPS location to be a useful indicator of true location.

### Some Alternative Embodiments

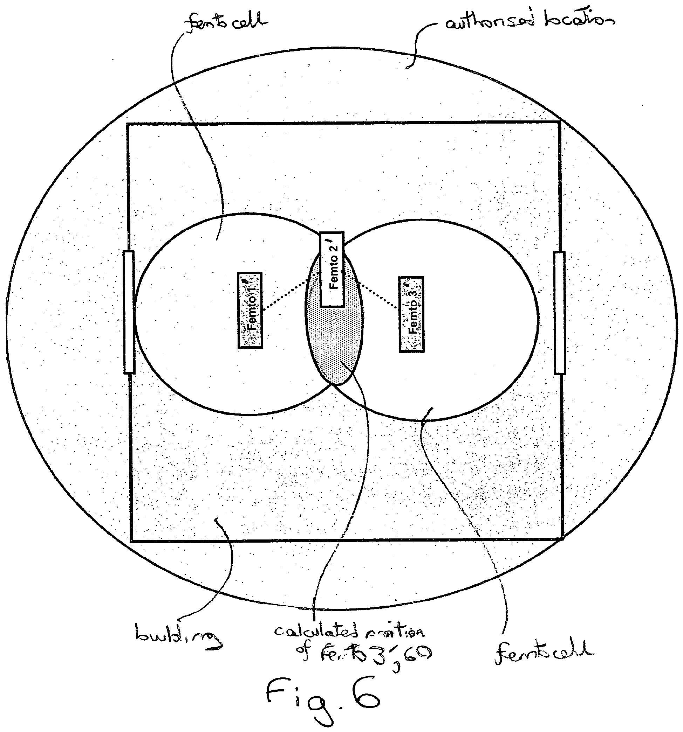

As shown in Figure 6, in a basically similar approach to Figures 4 and 5, a femtocell uses multiple sources of location information to interpolate its own location. For example, as shown in Figure 6, Femto2' uses the information from its two neighbouring femtos, namely Femto1' and Femto3' to calculate position 60 of Femto2'. Specifically, in this example, Femto1' and Femto3' determine their own locations using their GPS location units. Femto2' is positioned out of GPS satellite signal coverage so detects Femto1' and Femto3' and gets their location information over backhaul internet connections. Femto2' then uses this received information to determine the location of Femto2' as within the overlap of Femto1' and Femto3' cell coverage and within the authorised location 58' in which these femtos are permitted to be used. This interpolation has an advantage that accuracy of the location determined for Femto2' is improved as Femto2' is determined as being in the area of overlap of the femtocells (in other words coverage areas) of Femto1' and Femto3'.

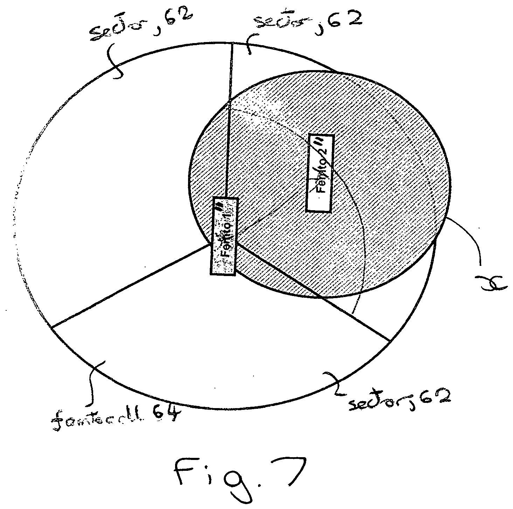

In other embodiments, further measurements and/or further information from neighbouring femtos of known positions can be used to improve accuracy of determining location of a femto. For example, as shown in Figure 7, Femto 1" of known position has directional antennas (not shown) each covering an associated area roughly corresponding to a sector 62 of the femtocell 64 of Femto1". When Femto2" is informed of being within the cell 64 of Femto1" the additional information passed to Femto2" from Femto1" that Femto1" is within the coverage area x associated with one of the sectors, further limits, and hence improves the accuracy of, its determined position.

Another example embodiment (not shown) additionally involves use of transmission trip times of radio transmissions between femtos to provide information of distance between the femtos which is used to improve the accuracy of the location determination of a femto that cannot itself detect GPS satellite signals so relies on location information of other femtos in the vicinity.

In a further alternative embodiment (not shown) the determined location of a small cell base station is determined from received information provided by a neighbour small cell base station as to the location within a macrocellular overlay network of that neighbour base station. For example the information of the location is an identifier of the overlying macrocell.

### General

The present invention may be embodied in other specific forms without departing from its essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

A person skilled in the art would readily recognize that steps of various above-described methods can be performed by programmed computers. Some embodiments relate to program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. Some embodiments involve computers programmed to perform said steps of the above-described methods.

## Claims

1. A method of authorising a small cell base station (30, Femto3,) to transmit comprising the small cell base station:
detecting a neighbour base station (Femto2);
sending to the neighbour base station a request for information of the location of the neighbour base station;
receiving said information in which a count is received with the location information, the count indicating the number of base stations between a neighbour base station (Femto1) that is the original source of the location information and the neighbour base station (Femto2) sending the information on;
determining its own location from said information;
checking whether the determined location is within a given area (58) in which the small cell base station is permitted to transmit; and
dependent upon the check indicating that the determined location is within the given area, authorising the small cell base station to transmit;
in which the neighbour base stations are small cell base stations in which the small cell base station includes a Global Navigation Satellite System locator (48), and the small cell base station detects that the small cell base station is not in Global Navigation Satellite coverage so triggers the detecting of a neighbour base station; and in which checking at a small cell base station whether determined location is within given area is undertaken dependent upon the count that is received not exceeding a given threshold level.

2. A method according to claim 1, in which the small cell base station is sufficiently deep within a building so as to not be in Global Navigation Satellite coverage.

3. A method according to any preceding claim, in which the accuracy of the determined location is estimated dependent on the signal attenuation measured between the small cell base station and the neighbour base station, and said checking is undertaken dependent upon being estimated as having a level of accuracy above a threshold level.

4. A method according to any preceding claim, comprising authorising a further small cell base station (Femto3) to transmit comprising the further small cell base station:
detecting said small cell base station (Femto2);
sending to the small cell base station a request for information of the location of the small cell base station;
receiving said information;
determining its own location from said information;
checking whether the determined location is within a given area in which the further small cell base station (Femto3) is permitted to transmit; and
dependent upon the check by the further small cell base station indicating that its determined location is within its given area, authorising the further small cell base station to transmit.

5. A method according to claim 4, in which the accuracy of the determined location is estimated dependent on the signal attenuation measured between the further small cell base station (Femto3) and the small cell base station (Femto2) and measured between the small cell base station (Femto2) and the neighbour base station (Femto1), and said checking by said further small cell base station is undertaken dependent upon being estimated as having a level of accuracy above a threshold level.

6. A method according to claim 4 or claim 5, in which the steps are repeated for a number of further small cell base stations, each obtaining the location information from a previous further small cell base station to an accuracy dependent upon attenuation measured between the base stations.

7. A method according to any preceding claim in which the small cell base station determining its own location from the received information of the location of the neighbour is by taking its own location as that indicated in the received information.

8. A method according to any of claims 1 to 7, further comprising:
sending to a second neighbour base station (Femto3')a request for information of the location of the second neighbour base station;
receiving said information;
determining its own location by interpolation from said information of the second neighbour base station (Femto3') and said information of the neighbour base station(Femto1');
checking whether the determined location is within a given area in which the small cell base station is permitted to transmit; and
dependent upon the result of the check, authorising the small cell base station (Femto2') to transmit.

9. A method according to any preceding claim, in which the neighbour base station (Femto1") has directional antennas and sends to the small cell base station (Femto2") an indication of in which sector (62) of its coverage area (64) the small cell base station is situated, this indication being used in providing at least one of the determined location and associated accuracy.

10. A small cell base station comprising:
a detector (50) configured to detect a neighbour small cell base station;
means (52) to send to the neighbour small cell base station a request for information of the location of the neighbour small cell base station;
means (52) to receive said information in which a count is received with the location information, the count indicating the number of base stations between a neighbour base station (Femto1) that is the original source of the location information and the neighbour base station (Femto2) sending the information on;
means (51,53) to determine the location of the small cell base station from said information,
means (51) to check whether the determined location is within a given area in which the small cell base station is permitted to transmit,
means (51,55) to authorise the small cell base station to transmit dependent upon the result of the check;
in which the neighbour base stations are small cell base stations; in which the small cell base station includes a Global Navigation Satellite System locator (48), and the small cell base station comprises means to detect that the small cell base station is not in Global Navigation Satellite coverage so triggers the detecting of a neighbour base station; and
in which the checking at a small cell base station whether determined location is within given area is undertaken dependent upon the count that is received not exceeding a given threshold level.

11. A small cell base station according to claim 13, comprising means to estimate the accuracy of the determined location dependent on the signal attenuation measured between the small cell base station and the neighbour base station, and said means (51) to check is operative to check dependent upon the accuracy being estimated as having a level of accuracy above a threshold level.

## Patentansprüche

1. Verfahren zum Berechtigen einer kleinzelligen Basisstation (30, Femto3) zum Übertragen, wobei die kleinzellige Basisstation umfasst:
Erkennen einer benachbarten Basisstation (Femto2);
Senden einer Informationsanfrage an die benachbarte Basisstation über den Standort der benachbarten Basisstation;
Empfangen besagter Information, in der ein Zähler mit der Standortinformation empfangen wird, wobei der Zähler die Anzahl von Basisstationen angibt zwischen einer benachbarten Basisstation (Femto1), welche die ursprüngliche Quelle der Standortinformation ist, und der benachbarten Basisstation (Femto1), welche die Information weiterschickt;
Bestimmen des eigenen Standortes aus besagter Information;
Überprüfen, ob sich der bestimmte Standort innerhalb eines bestimmten Bereichs (58) befindet, in dem die kleinzellige Basisstation übertragen darf; und
abhängig von der Überprüfung, die angibt, dass sich der bestimmte Standort innerhalb des bestimmten Bereichs befindet, das Berechtigen der kleinzelligen Basisstation zum Übertragen;
bei dem die benachbarten Basisstationen kleinzellige Basisstationen sind;
bei dem die kleinzellige Basisstation einen globalen Satelliten-Navigationssystem-Locator (48) beinhaltet und die kleinzellige Basisstation erkennt, dass sich die kleinzellige Basisstation nicht in der Abdeckung der globalen Satellitennavigation befindet und dann das Erkennen einer benachbarten Basisstation auslöst; und bei dem das Überprüfen an einer kleinzelligen Basisstation, ob sich der bestimmte Standort innerhalb des bestimmten Bereichs befindet, in Abhängigkeit davon ausgeführt wird, ob der empfangene Zähler einen bestimmten Schwellwertpegel nicht überschritten hat.

2. Verfahren nach Anspruch 1, in dem sich die kleinzellige Basisstation ausreichend tief innerhalb eines Gebäudes befindet, um nicht in der Abdeckung der globalen Satellitennavigation zu sein.

3. Verfahren nach einem beliebigen der vorstehenden Ansprüche, bei dem die Genauigkeit des bestimmten Standortes in Abhängigkeit von der Signaldämpfung bestimmt wird, gemessen zwischen der kleinzelligen Basisstation und der benachbarten Basisstation, und wobei besagtes Überprüfen in Abhängigkeit davon ausgeführt wird, ob Schätzungen zufolge der Genauigkeitspegel über dem Schwellwertpegel liegt.

4. Verfahren nach einem beliebigen der vorstehenden Ansprüche, umfassend das Berechtigen einer weiteren kleinzelligen Basisstation (Femto3) zum Übertragen, wobei die weitere kleinzellige Basisstation umfasst:
Erkennen besagter kleinzelligen Basisstation (Femto2);
Senden einer Informationsanfrage an die kleinzellige Basisstation über den Standort der kleinzelligen Basisstation;
Empfangen besagter Information;
Bestimmen des eigenen Standortes aus besagter Information;
Überprüfen, ob sich der bestimmte Standort innerhalb eines bestimmten Bereichs befindet, in dem die weitere kleinzellige Basisstation (Femto3) übertragen darf; und
abhängig von der Überprüfung durch die weitere kleinzellige Basisstation, die angibt, dass sich ihr bestimmter Standort innerhalb des bestimmten Bereichs befindet, das Berechtigen der weiteren kleinzelligen Basisstation zum Übertragen.

5. Verfahren nach Anspruch 4, bei dem die Genauigkeit des bestimmten Standortes in Abhängigkeit von der Signaldämpfung bestimmt wird, gemessen zwischen der weiteren kleinzelligen Basisstation (Femto3) und der kleinzelligen Basisstation (Femto2) und gemessen zwischen der kleinzelligen Basisstation (Femto2) und der benachbarten Basisstation (Femto1), und wobei besagtes Überprüfen durch besagte weitere kleinzellige Basisstation in Abhängigkeit davon ausgeführt wird, ob Schätzungen zufolge der Genauigkeitspegel über dem Schwellwertpegel liegt.

6. Verfahren nach Anspruch 4 oder 5, bei dem die Schritte für eine Reihe von weiteren kleinzelligen Basisstationen wiederholt werden, von denen jede die Standortinformation von einer vorigen weiteren kleinzelligen Basisstation erhält, mit einer Genauigkeit abhängig von der zwischen den Basisstationen gemessenen Dämpfung.

7. Verfahren nach einem beliebigen der vorstehenden Ansprüche, bei dem die kleinzellige Basisstation ihren eigenen Standort aus der empfangenen Information von dem Standort der benachbarten bestimmt, indem sie ihren eigenen Standort als den in der empfangenen Information angegebenen übernimmt.

8. Verfahren nach einem der Ansprüche 1 bis 7, ferner umfassend:
Senden einer Informationsanfrage an eine zweite benachbarte Basisstation (Femto3') über den Standort der zweiten benachbarten Basisstation;
Empfangen besagter Information;
Bestimmen des eigenen Standortes durch Interpolation aus besagter Information von der zweiten benachbarten Basisstation (Femto3') und besagter Information von der benachbarten Basisstation (Femto1');
Überprüfen, ob sich der bestimmte Standort innerhalb eines bestimmten Bereichs befindet, in dem die kleinzellige Basisstation übertragen darf; und in Abhängigkeit vom Ergebnis der Überwachung, das Berechtigen der kleinzelligen Basisstation (Femto2') zum Übertragen.

9. Verfahren nach einem beliebigen der vorstehenden Ansprüche, bei dem die benachbarte Basisstation (Femto2") Richtungsantennen hat und an die kleinzellige Basisstation (Femto2") eine Angabe dazu schickt, in welchem Sektor (62) ihres Abdeckungsbereichs (64) sich die kleinzellige Basisstation befindet, und die Angabe verwendet wird zum Bereitstellen von mindestens einem der bestimmten Standorte und der verbundenen Genauigkeit.

10. Kleinzellige Basisstation, umfassend:
einen Detektor (50), konfiguriert zum Erkennen einer benachbarten kleinzelligen Basisstation;
Mittel (52) zum Senden einer Informationsanfrage an die benachbarte kleinzellige Basisstation über den Standort der benachbarten kleinzelligen Basisstation;
Mittel (52) zum Empfangen besagter Information, in der ein Zähler mit der Standortinformation empfangen wird, wobei der Zähler die Anzahl von Basisstation angibt zwischen einer benachbarten Basisstation (Femto1), welche die ursprüngliche Quelle der Standortinformation ist, und der benachbarten Basisstation (Femto1), welche die Information weiterschickt;
Mittel (51, 53) zum Bestimmen des Standortes der kleinzelligen Basisstation aus besagter Information,
Mittel (51) zum Überprüfen, ob sich der bestimmte Standort innerhalb eines bestimmten Bereichs befindet, in dem die kleinzellige Basisstation übertragen darf,
Mittel (51, 55) zum Berechtigen der kleinzelligen Basisstation zum Übertragen, in Abhängigkeit von dem Ergebnis der Überprüfung;
bei der die benachbarten Basisstationen kleinzellige Basisstationen sind;
bei der die kleinzellige Basisstation einen globalen Satelliten-Navigationssystem-Locator (48) beinhaltet und die kleinzellige Basisstation Mittel zum Erkennen umfasst, dass sich die kleinzellige Basisstation nicht in der Abdeckung der globalen Satellitennavigation befindet und dann das Erkennen einer benachbarten Basisstation auslöst; und
bei der das Überprüfen an einer kleinzelligen Basisstation, ob sich der bestimmte Standort innerhalb des bestimmten Bereichs befindet, in Abhängigkeit davon ausgeführt wird, ob der empfangene Zähler einen bestimmten Schwellwertpegel nicht überschritten hat.

11. Kleinzellige Basisstation nach Anspruch 13, umfassend die Mittel zum Schätzen der Genauigkeit des bestimmten Standortes in Abhängigkeit von der Signaldämpfung, gemessen zwischen der kleinzelligen Basisstation und der benachbarten Basisstation, und besagte Mittel (51) zum Überprüfen der Betriebsfähigkeit in Abhängigkeit davon, ob Schätzungen zufolge der Genauigkeitspegel über dem Schwellwertpegel liegt.

## Revendications

1. Procédé pour autoriser une petite station de base cellulaire (30, Femto3,) à transmettre comprenant les actions suivantes de la petite station de base cellulaire :
détecter une station de base voisine (Femto2) ;
envoyer à la station de base voisine une demande d'informations de l'emplacement de la station de base voisine ;
recevoir lesdites informations dans lesquelles un comptage est reçu avec les informations d'emplacement, le comptage indiquant le nombre de stations de base entre une station de base voisine (Femto1), qui est la source d'origine des informations d'emplacement, et la station de base voisine (Femto2) à laquelle les informations sont envoyées ;
déterminer son propre emplacement à partir desdites informations ;
vérifier si l'emplacement déterminé est dans une zone donnée (58) dans laquelle la petite station de base cellulaire est autorisée à transmettre ; et
si la vérification indique que l'emplacement déterminé est dans la zone donnée, autoriser la petite station de base cellulaire à transmettre ;
les stations de base voisines étant des petites stations de base cellulaires,
la petite station de base cellulaire comprenant un localisateur de système global de navigation par satellite (48), et la petite station de base cellulaire détecte que la petite station de base cellulaire n'est pas dans la couverture de satellite de navigation globale déclenchant ainsi la détection d'une station de base voisine ; et la vérification, au niveau d'une petite station de base cellulaire qu'un emplacement déterminé est dans une zone donnée, est mise en oeuvre en fonction du comptage qui est reçu et ne dépassant pas un niveau de seuil donné.

2. Procédé selon la revendication 1, dans lequel la petite station de base cellulaire est située assez profondément dans un bâtiment pour ne pas être dans la couverture de satellite de navigation globale.

3. Procédé selon l'une quelconque des revendications précédentes, dans lequel la précision de l'emplacement déterminé est estimée en fonction de l'atténuation de signal mesurée entre la petite station de base cellulaire et la station de base voisine, et ladite vérification est mise en oeuvre si elle a été estimée comme ayant un niveau de précision supérieur à un niveau de seuil.

4. Procédé selon l'une quelconque des revendications précédentes, consistant à autoriser une autre petite station de base cellulaire (Femto3) à transmettre, comprenant les actions suivantes de l'autre petite station de base cellulaire :
détecter ladite petite station de base cellulaire (Femto2) ;
envoyer à la petite station de base cellulaire une demande d'informations de l'emplacement de la petite station de base cellulaire ;
recevoir lesdites informations ;
déterminer son propre emplacement à partir desdites informations ;
vérifier si l'emplacement déterminé est dans une zone donnée dans laquelle l'autre petite station de base cellulaire (Femto3) est autorisée à transmettre ; et
si la vérification par l'autre petite station de base cellulaire indique que son emplacement déterminé est dans sa zone donnée, autoriser l'autre petite station de base cellulaire à transmettre.

5. Procédé selon la revendication 4, dans lequel la précision de l'emplacement déterminé est estimée en fonction de l'atténuation de signal mesurée entre l'autre petite station de base cellulaire (Femto3) et la petite station de base cellulaire (Femto2) et mesurée entre la petite station de base cellulaire (Femto2) et la station de base voisine (Femto1), et ladite vérification par ladite autre petite station de base cellulaire est mise en oeuvre si elle a été estimée comme ayant un niveau de précision supérieur à un niveau de seuil.

6. Procédé selon la revendication 4 ou la revendication 5, dans lequel les étapes sont répétées pour plusieurs autres petites stations de base cellulaires, chacune obtenant les informations d'emplacement à partir d'une autre petite station de base cellulaire précédente à un niveau de précision qui dépend de l'atténuation mesurée entre les stations de base.

7. Procédé selon l'une quelconque des revendications précédentes dans lequel la détermination par la petite station de base cellulaire de son propre emplacement à partir des informations reçues de l'emplacement de la station de base voisine est effectuée en considérant son propre emplacement comme étant celui indiqué dans les informations reçues.

8. Procédé selon l'une quelconque des revendications 1 à 7, comprenant en outre les étapes suivantes :
envoyer à une deuxième station de base voisine (Femto3') une demande d'informations de l'emplacement de la deuxième station de base voisine ;
recevoir lesdites informations ;
déterminer son propre emplacement par interpolation à partir desdites informations de la deuxième station de base voisine (Femto3') et desdites informations de la station de base voisine (Femto2) ;
vérifier si l'emplacement déterminé est dans une zone donnée dans laquelle la petite station de base cellulaire est autorisée à transmettre ; et
selon le résultat de la vérification, autoriser la petite station de base cellulaire (Femto2') à transmettre.

9. Procédé selon l'une quelconque des revendications précédentes, dans lequel la station de base voisine (Femto2") a des antennes directionnelles et envoie à la petite station de base cellulaire (Femto2") une indication du secteur (62) de sa zone de couverture (64) dans lequel la petite station de base cellulaire est située, cette indication étant utilisée pour fournir l'emplacement déterminé et/ou la précision associée.

10. Petite station de base cellulaire comprenant :
un détecteur (50) configuré pour détecter une petite station de base cellulaire voisine ;
des moyens (52) pour envoyer à la petite station de base cellulaire voisine une demande d'informations de l'emplacement de la petite station de base cellulaire voisine ;
des moyens (52) pour recevoir lesdites informations dans lesquelles un comptage est reçu avec les informations d'emplacement, le comptage indiquant le nombre de stations de base entre une station de base voisine (Femto1), qui est la source d'origine des informations d'emplacement, et la station de base voisine (Femto2) à laquelle les informations sont envoyées ;
des moyens (51, 53) pour déterminer l'emplacement de la petite station de base cellulaire à partir desdites informations,
des moyens (51) pour vérifier si l'emplacement déterminé est dans une zone donnée dans laquelle la petite station de base cellulaire est autorisée à transmettre,
des moyens (51, 55) pour autoriser la petite station de base cellulaire à transmettre en fonction du résultat de la vérification ;
les stations de base voisines étant des petites stations de base cellulaires ;
la petite station de base cellulaire comprenant un localisateur de système global de navigation par satellite (48), et la petite station de base cellulaire comprend des moyens pour détecter que la petite station de base cellulaire n'est pas dans la couverture de satellite de navigation globale déclenchant ainsi la détection d'une station de base voisine ; et
la vérification au niveau d'une petite station de base cellulaire qu'un emplacement déterminé est dans une zone donnée étant mise en oeuvre en fonction du comptage qui est reçu et ne dépassant pas un niveau de seuil donné.

11. Petite station de base cellulaire selon la revendication 13, comprenant des moyens pour estimer la précision de l'emplacement déterminé en fonction de l'atténuation de signal mesurée entre la petite station de base cellulaire et la station de base voisine, et lesdits moyens (51) de vérification sont opérationnels pour vérifier en fonction de la précision estimée comme ayant un niveau de précision supérieur à un niveau de seuil.
